# FASCICULE DE BREVET EUROPEEN

(11) **EP 2 649 431 B1**
(45) Date de publication et mention de la délivrance du brevet: **04.03.2015**
(21) Numéro de dépôt: 11805108.5
(22) Date de dépôt: 07.12.2011
(51) Int. Cl.: G01N 21/64, G01N 21/65, G01N 21/55, G02B 21/00

(54) **SYSTEME ET PROCEDE D'IMAGERIE MULTITECHNIQUES POUR L'ANALYSE CHIMIQUE, BIOLOGIQUE OU BIOCHIIMIQUE D'UN ECHANTILLON.**
SYSTEM UND VERFAHREN FÜR MULTITECHNISCHE BILDGEBUNG ZUR CHEMISCHEN, BIOLOGISCHEN ODER BIOCHEMISCHEN ANALYSE EINER PROBE
SYSTEM AND METHOD OF MULTITECHNIQUE IMAGING FOR THE CHEMICAL, BIOLOGICAL OR BIOCHEMICAL ANALYSIS OF A SAMPLE

(30) Priorité: 07.12.2010 FR 1060195
(43) Date de publication de la demande: 16.10.2013
(73) Titulaire: Ecole Polytechnique, 91128 Palaiseau Cedex (FR); Université des Sciences et Technologies De Lille - Lille 1, 59655 Villeneuve d'Ascq (FR); Centre National de la Recherche Scientifique (CNRS), 75794 Paris Cedex 16 (FR)
(72) Inventeur: OZANAM, François, F-91310 Leuville-sur-orge (FR); CHAZALVIEL, Jean-Noël, F-06600 Antibes (FR); BOUKHERROUB, Rabah, F-59650 Villeneuve D'ascq (FR); GALOPIN, Elisabeth Anne-Gabrielle, F-92140 Clamart (FR); GOUGET-LAEMMEL, Anne Chantal, F-92380 Garches (FR); SZUNERITS, Sabine, F-59650 Villeneuve D'ascq (FR); TOUAHIR, Larbi, F-59170 Croix (FR)
(74) Mandataire: Reboussin, Yohann Mickaël Noël
(86) Numéro de dépôt international: PCT/FR2011/052886
(87) Numéro de publication internationale: WO 2012/076810

(56) Documents cités:
- WO-A2-2007/070382
- US-A- 3 229 564
- US-A- 4 072 426
- US-A1- 2004 090 621
- US-A1- 2006 238 745

## Description

La présente invention concerne le domaine de l'imagerie pour l'analyse chimique, biologique ou biochimique d'un échantillon.

Elle trouve une mise en oeuvre particulière dans le contexte des biocapteurs, où l'utilisation de substrats comportant des dépôts métalliques sous forme de nanostructures permet d'obtenir des augmentations de sensibilité spectaculaires. Les échantillons se présentent généralement sous forme de "spots" ou (micro)gouttes de substances connues (ou à analyser) déposés sur des supports comme des lames de microscope et sur lesquelles des analyses optiques sont pratiquées en réalisant une image de la lame par l'une ou l'autre des techniques citées ci-dessous, éventuellement après ou pendant la mise en contact de l'échantillon avec une substance à analyser (ou de composition connue, respectivement).

Plus précisément, l'invention concerne selon un premier de ses objets un système d'imagerie pour l'analyse chimique, biologique ou biochimique d'un échantillon, le système comprenant
- un dispositif de support de l'échantillon,
- un dispositif de détection optique,
- un dispositif d'éclairement, susceptible d'émettre un faisceau lumineux monochromatique, et
- un objectif de grande ouverture.

Un tel système de microscopie est bien connu de l'homme du métier.

Ces dernières années, de nombreux développements ont été effectués en microscopie dans les techniques d'imagerie présentant un contraste révélant certaines propriétés de l'objet imagé, en particulier en spectroscopie de réflectance/transmittance UV/visible autrement appelée LSPR pour « Localized Surface Plasmon Resonance » ou résonance plasmonique de surface ; en fluorescence (en particulier en MEF pour « Metal-Enhanced Fluorescence »), ainsi qu'en diffusion Raman (ou SERS pour « Surface-Enhanced Raman Scattering »).

La présente invention exploite avantageusement certaines au moins de ces techniques dans le domaine des biocapteurs.

En effet, les biocapteurs offrent des solutions plus efficaces que les essais classiques sur membranes, surtout lorsqu'ils peuvent être utilisés dans des configurations permettant une mesure massivement parallèle de plusieurs couples sonde/cible sur un même support.

Or la mesure à haut débit des interactions biomoléculaires, en particulier pour les protéines mais aussi pour des molécules de poids moléculaires plus faibles comme les oligonucléotides, est un enjeu important dans certains domaines d'application comme le diagnostic ou le criblage pour la recherche de nouveaux médicaments.

Pour mesurer ces interactions, il est essentiel de pouvoir mesurer en fonction du temps les cinétiques d'association/dissociation des couples sonde/cible. La mesure de ces interactions en temps réel est aussi nécessaire pour disposer de solutions efficaces pour des applications dans le domaine du contrôle (en particulier lorsqu'il s'agit de contrôle « en flux », par exemple pour contrôler des produits en sortie de chaînes) ou en surveillance (détection environnementale de marqueurs toxiques par exemple). Pour ces types de mesure, il est essentiel de mesurer en fonction du temps des évènements ou des cinétiques d'association/dissociation de couples sonde/cible qui, suivant les cas, peuvent faire ou non l'objet d'un marquage spécifique avec, par exemple, un marqueur fluorescent.

Parmi les techniques actuellement disponibles, deux types de détection offrent des solutions efficaces au suivi des interactions moléculaires en temps réel : la fluorescence et la résonance de plasmon de surface.

On trouve actuellement sur le marché des lecteurs basés sur l'un ou l'autre de ce type de détection qui permettent le suivi en temps réel et in situ de l'association et/ou de la dissociation d'un couple de biomolécules (une sonde attachée à la surface d'un support solide, et une cible présente dans un échantillon à analyser). Le document WO2007/070381 A2 divulgue un microscope optique en vue directe pour l'observation simultanée de fluorescence et d'images à fond noir en utilisant un filtre et un diaphragme.

La fluorescence offre la meilleure sensibilité, mais présente l'inconvénient de devoir marquer les cibles ou les sondes avec des groupements fluorophores.

La résonance de plasmon de surface a l'avantage de pouvoir détecter des interactions entre cible et sonde non marquées, mais présente une sensibilité moins bonne. Dans sa version conventionnelle, les contraintes liées à la géométrie d'excitation rendent l'imagerie délicate. Elle peut avantageusement être utilisée en mode imagerie en excitant des résonances de plasmon localisé de surface (LSPR) dans des couches métalliques structurées sous forme d'îlots de dimensions nanométriques. L'analyse se fait alors au moyen d'une analyse spectroscopique simple de la variation de la réflexion ou de la transmission de la couche au contact d'un échantillon.

Lorsqu'on utilise des sondes marquées par un fluorophore, une analyse LSPR menée en parallèle de l'analyse par fluorescence peut être utilisée pour détecter la présence d'adsorption non spécifique sur le capteur, ce qui au-delà d'un certain seuil peut masquer les sondes et rendre le capteur peu sensible. Un tel contrôle est essentiel pour maintenir les performances dans les applications dans le domaine du contrôle ou de la surveillance. Lorsqu'on utilise des sondes non marquées, la LSPR utilisée seule présente aussi l'inconvénient de ne pas offrir de discrimination chimique.

C'est pourquoi il est reconnu que son couplage à une technique d'identification chimique sans marquage comme la diffusion Raman représente un objectif majeur.

Or, ces techniques comportent des exigences quelque peu contradictoires.

Pour la spectroscopie de réflectance/transmittance, il est souhaitable de travailler en incidence normale ou quasi-normale, avec une faible ouverture angulaire, et il est utile de pouvoir varier continûment la longueur d'onde. En effet, afin de déterminer les conditions de mesure, on souhaite pouvoir acquérir un spectre dans toute la gamme visible et éventuellement UV et/ou IR, quitte à fixer ensuite cette dernière une fois les conditions de mesure définies.

Pour la fluorescence, pour des raisons de sensibilité, on souhaite collecter la lumière émise sur un angle solide aussi grand que possible, et l'excitation doit être monochromatique et intense de façon à maximiser le signal de fluorescence.

Pour la diffusion Raman, comme pour la fluorescence la lumière émise doit être collectée sur un angle solide aussi grand que possible ; l'excitation doit également être monochromatique et intense, mais il faut en plus analyser la distribution en longueur d'onde de la lumière émise par l'échantillon et plus précisément les changements de longueur d'onde (décalages Raman) par rapport au rayonnement excitateur. Ceci conduit généralement à intercaler un dispositif dispersif (comme par exemple un réseau de diffraction) entre l'échantillon et le détecteur, ce qui n'est pas compatible avec l'enregistrement direct d'une image. Une alternative consiste à utiliser un réseau holographique, ou plus généralement un dispositif de filtrage spatial, et à reconstituer ensuite des images pour chaque longueur d'onde analysée au moyen de programmes de traitement d'images élaborés.

A l'heure actuelle il n'existe donc aucune solution satisfaisant les exigences relatives à toutes ces techniques. De plus, aucune solution ne semble a priori satisfaisante pour comparer simplement des images Raman résolues en longueur d'onde avec celles fournies par les autres techniques.

Dans ce contexte, le dispositif selon l'invention, par ailleurs conforme au préambule cité ci-avant, est essentiellement caractérisé en ce que l'objectif est configuré pour en aval de l'échantillon :
- focaliser le faisceau lumineux excitateur réfléchi en un point (C) situé dans le plan focal dudit objectif ; et
- transformer le faisceau lumineux réémis ou diffusé en faisceau quasi-parallèle, et en ce qu'il comprend en outre un dispositif d'obturation sélective du faisceau lumineux collecté issu de l'échantillon par le dit objectif, de préférence disposé dans ledit plan focal ; ce qui permet sélectivement l'analyse de l'échantillon selon deux au moins des techniques d'analyse parmi l'ensemble comprenant la résonance plasmonique de surface, la fluorescence, et la diffusion Raman comme décrit ultérieurement.

Au sens de la présente invention, l'amont et l'aval sont définis par rapport au sens du faisceau lumineux depuis la source jusqu'au détecteur.

Dans un mode de réalisation, le dispositif d'obturation sélective comprend
- Un diaphragme configuré pour être placé dans le plan focal dudit l'objectif autour du point C de focalisation, et
- Un obturateur configuré pour être placé au point C de focalisation.

De préférence, le dispositif d'obturation sélective comprend en outre au moins un filtre parmi un ensemble comprenant un filtre passe-haut et un filtre passe-bande.

Dans un mode de réalisation, le système comprend en outre, en amont dudit objectif, des moyens de réflexion du faisceau lumineux depuis la source dudit faisceau vers le dispositif de support de l'échantillon.

De préférence, lesdits moyens de réflexion comprennent un miroir disposé à proximité de l'axe optique, ou un miroir semi transparent placé dans l'axe optique, orientés à 45° ± 2° par rapport à l'axe optique, et disposés de sorte à permettre l'observation de l'échantillon en transmission ou en réflexion avec une occultation minimale.

Avantageusement le dispositif d'obturation sélective du faisceau lumineux collecté comprend en outre un commutateur électrique ou mécanique, pour activer sélectivement ledit diaphragme ou ledit obturateur.

Dans un mode de réalisation, le dispositif d'éclairement comprend une source de lumière blanche associée à un monochromateur, et/ou une source de lumière monochromatique, accordable ou non.

Dans un mode de réalisation, le dispositif d'éclairement comprend un ensemble d'au moins une fibre optique et un ensemble d'au moins une source lumineuse unitaire, éventuellement accordable, et dans lequel l'entrée d'au moins une fibre est susceptible d'être reliée à au moins une source unitaire.

Dans un mode de réalisation, l'entrée d'au moins une fibre est susceptible d'être reliée à plusieurs sources unitaires, le système comprenant en outre un commutateur pour relier l'entrée de la fibre à l'une des sources unitaires dans un mouvement relatif entre l'entrée de la fibre et la source unitaire reliée à l'entrée de celle-ci.

Dans un mode de réalisation, on dispose une pluralité de sources monochromatiques connectées chacune à une ou plusieurs fibres, les fibres issues de chaque source unitaire étant mélangées en entrée d'un faisceau de fibres dont la sortie est utilisé pour l'excitation de l'échantillon. La commutation entre les sources peut se faire alors sans déplacement relatif, en activant électriquement la source unitaire choisie, ou à l'aide d'obturateurs placés en sortie de chaque source unitaire. Un tel mode de réalisation peut être avantageux lorsque les sources unitaires sont des LEDS ou des lasers non accordables.

Selon un autre de ses objets, l'invention concerne également un procédé d'analyse chimique, biologique ou biochimique d'un échantillon, dans un système selon l'invention, comprenant des étapes consistant à :
- éclairer un échantillon par un faisceau lumineux monochromatique, et
- focaliser le faisceau en aval de l'échantillon par un objectif en un point C situé dans le plan focal dudit objectif. Le procédé est essentiellement caractérisé en ce qu'il comprend en outre des étapes consistant à :
- obturer sélectivement ledit faisceau collecté,
- acquérir par une caméra plusieurs images dudit échantillon en fonction de l'obturation sélective.

Dans un mode de réalisation, le procédé comprend en outre une étape de superposition desdites images.

Dans un mode de réalisation, le procédé comprend en outre une étape de filtrage du faisceau lumineux, en aval de la focalisation sélective.

Dans un mode de réalisation, le procédé comprend en outre des étapes consistant à
- accorder la source lumineuse monochromatique dudit faisceau lumineux, et
- mesurer différents décalages Raman en fonction de la longueur d'onde accordée choisie.

Grâce à l'invention, il est possible de comparer facilement des images enregistrées par deux ou trois des techniques citées, notamment par simple superposition, grâce à une colonne optique et un détecteur CCD communs pour toutes ces techniques, c'est-à-dire de coupler différentes techniques au sein d'un même appareillage, sans mouvement de l'échantillon par rapport à l'axe optique.

Grâce à l'invention, il est possible de réaliser des essais permettant d'obtenir des informations de nature chimique ou biochimique avec ou sans marquage des cibles ou des sondes, de corréler les informations obtenues par au moins deux techniques indépendantes et d'effectuer des contrôles de performance des essais en temps réel des supports utilisés pour les essais. Ces performances sont obtenues en permettant le couplage de différentes techniques au sein du même appareillage.

Grâce à l'invention, on peut réaliser l'imagerie d'une zone centimétrique, avec une résolution de l'ordre de 10µm, suffisante pour imager des spots de diamètre de l'ordre de 100µm.

Ainsi, alors que les solutions de l'art antérieur se sont intéressées à l'exaltation de la fluorescence par couplage avec la résonance de plasmon de surface localisé (LSPR), sans associer la mesure des deux grandeurs, il est possible, comme décrit ici, de mettre en oeuvre dans des conditions identiques (sans mouvement de l'échantillon) la détection de la LSPR et la détection de la fluorescence exaltée par l'effet plasmon. Grâce à l'invention cette association permet des réalisations intéressantes par exemple dans le contrôle de l'immobilisation de sondes non marquées avant la détection de cibles marquées lors d'une expérience, ou de la détection simultanée de cibles marquées de faibles poids moléculaires et de cibles non marquées de forts poids moléculaires au cours d'une même expérience.

La présente invention permet également la mesure à haut débit des interactions biomoléculaires en temps réel, enjeu fondamental dans certains domaines d'application comme le diagnostic ou le criblage pour la recherche de nouveaux médicaments. De même, la mesure de reconnaissance chimique de cibles spécifiques en temps réel est aussi nécessaire pour disposer de solutions efficaces pour des applications dans le domaine du contrôle ou de la surveillance.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation du système selon l'invention en configuration LSPR, avec une source lumineuse en réflectance et/ou une source lumineuse en transmittance, et
- la figure 2 illustre un mode de réalisation du système selon l'invention en configuration MEF, également avec une source lumineuse en réflectance et/ou une source lumineuse en transmittance.

L'un des principes de la présente solution est de mettre en oeuvre un dispositif de détection optique 20 unique pour une pluralité de techniques d'analyses possibles parmi l'ensemble comprenant la LSPR, la MEF et la SERS (voir définitions ci-avant).

Le dispositif de détection optique 20 comprend une lentille ou groupement de lentilles f2 et un détecteur tel qu'un capteur (ou caméra) CCD 21. Le grandissement du système optique est déterminé une fois fixées les dimensions du CCD et de la zone à explorer.

On prévoit également en complément un objectif f1 (lentille ou groupement de lentilles), décrit ultérieurement et servant à la mise en forme du faisceau lumineux collecté, issu de l'échantillon 10 et incident sur le détecteur 21.

Pour le groupement de lentilles f2, on peut envisager un objectif zoom, qui permet d'adapter, à la demande, les dimensions de la zone explorée. Alternativement, la fonction zoom peut être assurée par l'objectif f1, mais dans ce cas il faut prévoir un réglage de la distance entre le point C et l'objectif, ce qui est un peu moins avantageux. Pour bénéficier d'une bonne sensibilité de mesure, il est avantageux d'utiliser une caméra CCD avec un temps d'intégration réglable, de manière à pouvoir l'adapter en fonction de l'intensité lumineuse à détecter. Pour des mesures avec une très haute sensibilité (ce qui peut être le cas pour la mesure de la diffusion Raman ou de la fluorescence pour certains échantillons) il peut être avantageux d'utiliser une caméra CCD refroidie, de manière à pouvoir utiliser de longs temps de mesure pour l'enregistrement de chaque image.

Quelle que soit la technique d'analyse choisie pour la présente solution, l'éclairement d'un échantillon 10 consiste en un faisceau lumineux incident quasi-parallèle, d'intensité la plus uniforme possible sur toute la surface de la zone étudiée. La longueur d'onde de cet éclairement, monochromatique, peut toutefois être variable ou non, et le faisceau peut éclairer l'échantillon selon deux configurations, dites aussi géométries :
- Une configuration de mesures de réflectance, dite éclairement par l'avant, où l'échantillon est éclairé directement par le faisceau lumineux incident, issu d'un dispositif d'éclairement 30_R, et réfléchit celui-ci vers un dispositif de détection optique 20 ;
- Une configuration de mesures de transmittance, dite éclairement par l'arrière, où l'échantillon est éclairé indirectement par le faisceau lumineux incident, issu d'un dispositif d'éclairement 30_T, via une partie au moins des moyens de support 40 de l'échantillon, et transmet celui-ci vers un dispositif de détection optique 20.

Pour la fluorescence ou la diffusion Raman, l'éclairement peut être réalisé par l'avant ou par l'arrière. Toutefois, un éclairement par l'avant est légèrement plus favorable, du fait qu'il conduit à des lumières parasites (dues par exemple aux diffusions par les défauts ou poussières, ou encore à la fluorescence ou à la diffusion Raman du substrat sur lequel l'échantillon analysé est déposé et au travers duquel cet échantillon est illuminé) sensiblement plus faibles.

La mise en forme quasi-parallèle du faisceau lumineux incident pour l'éclairement d'un échantillon 10 peut être réalisée de la manière suivante.

En configuration de mesures de réflectance, le faisceau lumineux est issu du dispositif d'éclairement 30_R. Il est ensuite focalisé, par exemple par une lentille, sur un miroir incliné 50, placé (dans la colonne de détection) à quelques millimètres de l'axe optique YY et du plan focal FF, en l'espèce supérieur, de l'objectif f1, c'est-à-dire à proximité du point de focalisation C de l'objectif f1. Par exemple, le miroir 50 peut être un miroir de diamètre 2 mm dont le centre est situé à 3±1 mm de l'axe optique.

Grâce à ce positionnement, l'objectif f1 retransforme le faisceau en faisceau quasi-parallèle au niveau de l'échantillon 10.

A titre d'alternative (non représentée) un miroir semi-transparent peut être placé dans l'axe optique YY, également proche du plan focal FF de l'objectif f1, c'est-à-dire à proximité du point de focalisation C de l'objectif f1.

Le premier arrangement requiert de travailler hors axe optique (réglages plus difficiles, aberrations optiques plus importantes), mais le second présente l'inconvénient de perdre un facteur T(1-T) sur l'intensité collectée (où T est le coefficient de transmission du miroir semi-transparent), ce qu'il est préférable d'éviter en fluorescence et en diffusion Raman.

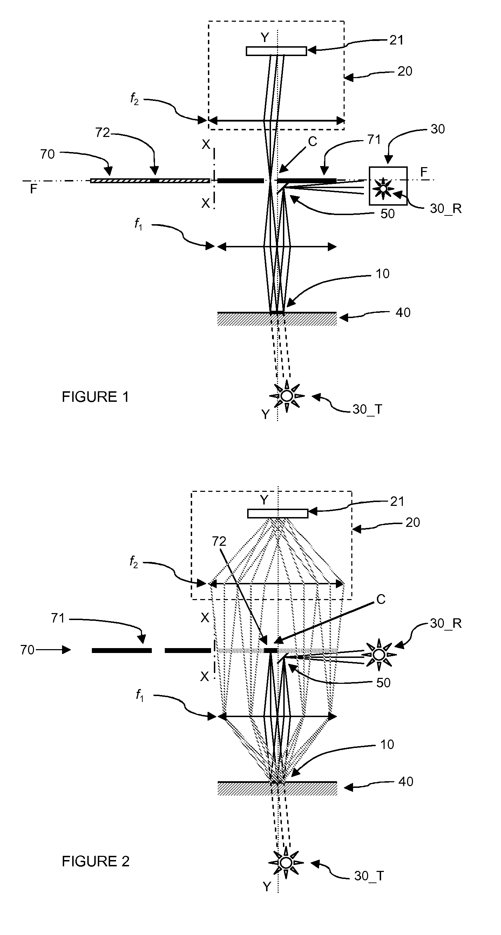

Dans le mode de réalisation illustré en figure 1, l'axe optique, donc la colonne optique, est vertical, le faisceau lumineux issu du dispositif d'éclairement 30_R est horizontal, de sorte que le miroir 50 est incliné d'environ 45° (45° ± 2°). De préférence, le miroir 50 incliné est le plus petit possible (diamètre de l'ordre de 1 mm à quelques mm), et l'inclinaison du faisceau par rapport à l'axe optique est la plus faible possible, compte tenu de la nécessité d'éviter que les rayons convergeant en C n'interceptent ledit miroir 50.

En configuration de mesures de transmittance, le faisceau lumineux est issu du dispositif d'éclairement 30_T. Il est mis en forme quasi-parallèle par des moyens optiques non représentés et dirigé vers l'échantillon par l'arrière, en incidence quasi-normale.

Dans un autre mode de réalisation de mesures de transmittance (non illustré), on peut mettre en oeuvre un miroir incliné d'environ 45° (45° ± 2°) et placé sur l'axe optique en amont de l'échantillon, en-dessous de celui-ci.

Pour obtenir un faisceau lumineux (quasi)monochromatique, le dispositif d'éclairement 30_R, 30_T peut comprendre une source de lumière blanche (par exemple lampe à arc xénon, une lampe à arc ou à incandescence) associée à un monochromateur, ou une source de lumière monochromatique (diode électroluminescente, diode laser ou laser), accordable ou non.

Dans les deux cas, la mise en forme de faisceau quasi-parallèle peut s'effectuer en injectant la lumière issue de la source dans une fibre ou un faisceau de fibres optiques d'ouverture modérée (avantageusement inférieure ou égale à 0,2) couplée à une lentille.

Il est à noter que pour toutes les mesures (techniques d'analyse), dans le cas d'un éclairement excitateur transmis par fibre optique, l'uniformité de l'éclairement de la zone à explorer repose sur l'homogénéité de la répartition angulaire du faisceau issu de la fibre optique. On peut corriger les non-uniformités éventuelles, soit par un filtre à gradient ou un filtre holographique approprié interposé au niveau de la lentille de collimation, soit par correction numérique au niveau de l'analyse d'image, ces deux techniques de correction pouvant également être combinées. Enfin, le faisceau parallèle peut être collimaté afin d'obtenir un éclairement sur une zone non circulaire, par exemple carrée ou rectangulaire.

Par source de lumière au sens de la présente invention, on entend soit une source lumineuse unitaire, soit une pluralité de sources lumineuses unitaires, chaque source unitaire pouvant émettre sur une longueur d'onde monochromatique commune ou selon une longueur d'onde monochromatique respective.

L'objectif f1 comprend une lentille ou assemblages de lentilles, de focale f1, fournissant au niveau du détecteur 21 un grandissement f2/f1 de l'ordre de 1 (avantageusement compris entre 0,1 et 10). Afin de satisfaire aux exigences de la fluorescence, l'ouverture dudit objectif f1 est aussi grande que possible (avantageusement au moins 1:1,4).

L'objectif f1 est configuré pour focaliser le faisceau lumineux excitateur en aval de l'échantillon, en un point C situé dans le plan focal (en l'espèce supérieur) FF dudit objectif f1 (qui dans le cas d'une lentille simple se situe à la distance f1 au-dessus de cette lentille).

L'objectif f1 de grande ouverture permet, en amont de l'échantillon d'éclairer celui-ci selon un faisceau quasi parallèle, d'incidence normale ou quasi-normale, et en aval de l'échantillon, d'une part de focaliser le faisceau réfléchi au point C situé dans le plan focal dudit objectif, et d'autre part de transformer le faisceau diffusé en faisceau quasi-parallèle, de façon qu'il puisse être éventuellement détecté par le dispositif de détection optique 20 selon un grand angle solide (par exemple, pour une ouverture 1:1,4, demi-angle au sommet voisin de 20° et angle solide de 0,12 π stéradians).

Ainsi comme illustré figure 2, le faisceau issu de la réflexion spéculaire est focalisé par l'objectif f1 au point C en aval de l'échantillon, tandis que le faisceau diffusé (réémis par l'échantillon) n'est pas focalisé mais est transformé en faisceau quasi-parallèle.

On notera que lors de la réflexion spéculaire, le faisceau lumineux est réfléchi par l'échantillon avec une longueur d'onde identique à celle du faisceau incident. Lors de la diffusion, par exemple en fluorescence ou en diffusion Raman, le faisceau lumineux est réémis ou diffusé par l'échantillon selon une longueur d'onde différente de la longueur d'onde incidente (hors diffusion de Rayleigh).

On place donc avantageusement dans le plan focal un dispositif 70 d'obturation sélective du faisceau lumineux collecté (par l'objectif f1).

Ce dispositif 70 d'obturation sélective permet sélectivement l'analyse de l'échantillon selon deux au moins des techniques d'analyse parmi l'ensemble comprenant la résonance plasmonique de surface, la fluorescence, et la diffusion Raman, comme décrit ultérieurement.

Le dispositif 70 d'obturation sélective du faisceau lumineux comprend par exemple :
- Un diaphragme 71 configuré pour être placé dans le plan focal dudit l'objectif autour du point C de focalisation, de sorte à obturer la partie non focalisée du faisceau afin que seule la partie focalisée soit transmise vers le dispositif de détection 20, et
- Un obturateur 72, de préférence complémentaire du diaphragme 71, configuré pour être placé au point C de focalisation, de sorte à créer une zone opaque sur et autour du point C, de sorte à obturer la partie focalisée du faisceau afin que seule la partie non focalisée soit transmise vers le dispositif de détection 20, afin que celui-ci puisse détecter selon un grand angle solide.

Le dispositif 70 d'obturation sélective du faisceau lumineux peut comprendre en outre au moins un filtre (non représenté(s)) parmi l'ensemble comprenant un filtre passe-haut et un filtre passe-bande.

Le filtre passe-haut est mis en oeuvre pour la détection de fluorescence, et le filtre passe-bande pour la détection de la diffusion Raman.

De préférence le filtre passe-bande est un filtre passe-bande étroit, ce qui permet d'obtenir une bonne résolution dans la détermination des décalages Raman, et placé avantageusement au niveau de l'obturateur. On peut pour cela utiliser un filtre interférentiel à bande étroite. Avantageusement, la bande passante du filtre est inférieure ou égale à 3 nm. Par exemple, le filtre de diamètre 50 mm référence 03 FIL 008 commercialisé par Melles Griot, qui possède une bande passante de 1 nm centrée sur une longueur d'onde de 632,8 nm, permet la mesure des décalages Raman avec une résolution de 25 cm⁻¹.

Pour la mesure de fluorescence, il peut également être avantageux de placer au niveau de l'obturateur 72 un filtre bloquant la longueur d'onde de la lumière utilisée pour l'excitation ; on se prémunit ainsi des rayonnements parasites dus à la diffusion de la lumière excitatrice par la surface de l'échantillon 10 ou par les défauts ou poussières du système optique.

Pour optimiser la sensibilité de la détection, il peut être avantageux d'utiliser des combinaisons de filtres optiques. Par exemple, on peut augmenter le taux de réjection d'un filtre passe-bande pour certaines longueurs d'ondes bloquées en lui superposant un filtre passe-haut ou/et un filtre passe-bas, ou par en superposant un filtre passe-bas et un filtre passe-haut limiter la bande de détection de la fluorescence pour mieux se prémunir de signaux parasites.

Selon divers modes de réalisation, on peut prévoir que le ou les filtres soi(en)t couplé(s) audit obturateur 72, et éventuellement solidaire(s) du mouvement de celui-ci. Par exemple on peut prévoir que l'obturateur 72 soit mobile en rotation et qu'un jeu d'au moins un filtre soit également mobile en rotation, éventuellement solidairement du mouvement dudit obturateur 72.

Le diaphragme 71 et l'obturateur 72 permettent ainsi respectivement de sélectionner le type de technique d'analyse parmi l'ensemble comprenant la résonance plasmonique de surface, la fluorescence, et la diffusion Raman.

L'obturation sélective du faisceau lumineux par le dispositif 70 est mise en oeuvre par commutation entre le diaphragme 71 et l'obturateur 72.

La commutation entre le diaphragme 71 et l'obturateur 72 peut être mise en oeuvre par un commutateur mécanique, par exemple par mouvement de rotation autour d'un axe XX (figure 1), de préférence parallèle à l'axe optique YY, grâce à un disque pivotant. Ou on peut prévoir aussi un mouvement de translation, de préférence dans un plan parallèle au plan focal FF, par exemple grâce une tirette coulissante.

Avec une commutation mécanique, le disque ou la tirette peut éventuellement porter également d'autres fonctions optiques (imagerie en champ clair: diaphragme large; imagerie en champ sombre: cache de la zone autour du point C, mais pas de filtre).

On peut prévoir également une commutation électrique, par un dispositif obturateur à cristaux liquides ou un dispositif électrochromique.

De préférence, l'ensemble comprenant le dispositif 70 d'obturation sélective du faisceau lumineux et le miroir 50 (quand il existe) est construit sous la forme d'un bloc mécaniquement rigide.

Il est à noter que les deux ensembles (diaphragme 71 + filtre éventuel et obturateur 72 vs. miroir incliné 50) ne peuvent être situés, exactement et simultanément, dans le plan focal FF de l'objectif f1. En pratique, un décalage de quelques millimètres est tolérable, compte tenu de la profondeur focale de l'objectif f1 et du diamètre du miroir 50, qui peut être légèrement surdimensionné.

Ainsi, grâce à l'obturation sélective du faisceau lumineux, il est possible d'utiliser un seul et même dispositif de détection 20 pour les différentes techniques d'analyse: résonance plasmonique, fluorescence, et Raman.

En fonction de la technique d'analyse choisie, c'est-à-dire en fonction de l'obturation de la partie focalisée ou non du faisceau lumineux, il suffit donc d'adapter le dispositif d'éclairement 30 pour sélectionner une longueur d'onde particulière d'éclairement de l'échantillon 10.

Le dispositif d'éclairement 30 est susceptible d'émettre un faisceau lumineux monochromatique, variable ou non.

A cet effet, le dispositif d'éclairement 30 peut comprendre un ensemble d'au moins une fibre optique et un ensemble d'au moins une source lumineuse unitaire.

On peut prévoir qu'au moins une source unitaire est accordable, et/ou qu'au moins une source unitaire est une source blanche, le dispositif d'éclairement 30 comprenant alors en outre un monochromateur.

Plusieurs réalisations sont possibles. Par exemple, l'entrée de chaque fibre peut être reliée à une source unitaire respective, ou l'entrée d'une fibre unique est commutée, déplacée, de source unitaire en source unitaire. Alternativement, on peut prévoir que la fibre unique soit fixe et les sources unitaires soient commutées (déplacées) à l'entrée de celle-ci. Comme vu précédemment, on peut prévoir également un faisceau de fibres dans lequel l'entrée d'au moins deux fibres est susceptible d'être reliée à une source lumineuse respective, le système comprenant en outre un commutateur électrique ou optique pour activer sélectivement ladite source lumineuse.

Ainsi, la commutation de source lumineuse peut s'effectuer soit avec mouvement en déplaçant l'extrémité d'une fibre optique (fibre unique dont l'entrée est déplacée d'une source à l'autre, ou fibres reliées chacune à une source respective, la sortie de l'une d'entre elles étant choisie (sélectionnée) pour l'éclairement de l'échantillon 10) ; soit sans mouvement par exemple par source à longueur d'onde variable, ou source blanche couplée à un monochromateur.

Le système fonctionne de la manière suivante :
Pour une technique d'analyse de résonance plasmonique de surface, en configuration de LSPR, le faisceau lumineux transmis (réfléchi) par l'échantillon 10 est collecté au travers du diaphragme 71 placé au point de convergence C de l'objectif f1, le diaphragme permettant de filtrer la partie non focalisée du faisceau en sortie de l'objectif f1, de sorte que seule la partie focalisée du faisceau lumineux atteigne le dispositif de détection 20.

Pour une technique de mesure ou d'analyse de fluorescence (MEF) ou de diffusion Raman (SERS), le faisceau lumineux transmis (réfléchi) par l'échantillon 10 est bloqué par l'obturateur 72 (de préférence complémentaire du diaphragme 71), l'obturateur 72 permettant de filtrer la partie focalisée du faisceau en sortie de l'objectif f1, de sorte que seule la partie non focalisée du faisceau lumineux atteigne le dispositif de détection 20. Ainsi la lumière est collectée sur un grand angle solide par le détecteur.

Pour la réalisation d'un imageur Raman classique, la nécessité d'analyser la lumière diffusée inélastiquement par l'excitation monochromatique afin de déterminer les signatures Raman permettant l'identification moléculaire (décalages Raman) a conduit les concepteurs à insérer un dispositif d'analyse spectrale (élément dispersif et/ou combinaison d'éléments retardateurs) entre l'échantillon et le détecteur. Cette contrainte rend difficile la mise au point d'un système permettant la comparaison directe avec des mesures de réflectivité pour l'analyse LSPR.

Pour résoudre cette contrainte, la présente solution propose au contraire de réaliser la détection de la diffusion Raman à une longueur d'onde déterminée, et de réaliser la mesure des décalages Raman en variant la longueur d'onde d'excitation, ce qui permet une comparaison directe et simple entre les images LSPR, Raman et de fluorescence, et semble totalement novateur. En particulier, il est utile de pouvoir effectuer une telle comparaison sans traiter les images, et en ayant la possibilité de comparer pixel à pixel les images présentant différents contrastes et enregistrées par des techniques différentes.

Aussi pour une technique de mesure ou d'analyse de la diffusion Raman selon la présente solution, la source lumineuse est monochromatique et accordable, de façon à pouvoir mesurer différents décalages Raman en choisissant différentes longueurs d'onde pour l'excitation. On enregistre ainsi directement des images Raman correspondant à la lumière diffusée à la longueur d'onde λ_det sélectionnée par le filtre étroit utilisé pour la détection, pour une longueur d'onde d'excitation issue de la source lumineuse λ_exc. Le décalage Raman est le même en tout point de l'image obtenue et sa valeur Δv (exprimée en nombre d'ondes) est donnée par la relation λv = (1/λ_exc) - (1/λ_det).

En enregistrant des images successivement pour différentes valeurs de λ_exc, on obtient ainsi des images pour différents décalages Raman directement et facilement comparables avec les images enregistrées par les autres techniques.

Le rayonnement étant détecté à une longueur d'onde distincte de celle du rayonnement excitateur, le principe retenu présente en outre l'avantage d'éviter toute contribution parasite due à la diffusion Rayleigh de l'échantillon 10 ou du système optique.

Ainsi, pour la mesure de la diffusion Raman, il est avantageux d'utiliser des sources suffisamment intenses et qui possèdent une longueur d'onde définie précisément.

On utilise à cet effet des lasers ou des diodes laser de préférence aux diodes électroluminescentes.

Par exemple on peut prévoir comme source un laser solide accordable (par exemple un laser de type titane:saphir, éventuellement équipé d'un système doubleur de fréquence suivant le domaine de longueur d'onde souhaité pour l'excitation), ou une source basée sur un oscillateur paramétrique optique (OPO).

Ces sources peuvent être des sources lumineuses continues ou en impulsions. Lorsque l'on utilise une source en impulsions, il est avantageux d'avoir une durée d'impulsion supérieure ou égale à 100 fs de manière à conserver le caractère monochromatique de la source, et un taux de répétition le plus élevé possible. Par exemple, on peut utiliser des sources commerciales basées sur des OPO qui fournissent un éclairement sous forme d'impulsions de quelques ns transportant quelques dizaines de mJ avec un taux de répétition de 10 Hz ou plus ; de telles sources fournissent des puissances instantanées élevées favorables à l'observation de l'effet Raman. Toutefois, dans les cas où l'on veut mesurer la présence ou l'absence d'un signal Raman connu, il peut être économique de ne pas utiliser de source excitatrice accordable et de n'utiliser qu'une, deux ou un petit nombre de sources monochromatiques (la présence de plusieurs sources permet avantageusement de fournir des mesures de référence pour lesquelles aucune diffusion Raman n'est attendue).

On peut ainsi bénéficier d'une mesure spectroscopique avec une bonne résolution et/ou dans une gamme de décalages Raman étendue.

On notera par ailleurs, toujours pour la mesure de la diffusion Raman, que pour éviter la présence de rayonnement parasite dans le signal détecté, il est avantageux de filtrer le faisceau lumineux excitateur à l'aide d'un filtre de réjection (bloquant) dont la bande de coupure est centrée sur la longueur d'onde choisie pour la détection. La largeur de la bande de blocage de ce filtre détermine les plus faibles décalages Raman mesurables par le système. Par exemple ce filtre peut être un filtre holographique à haut pouvoir de réjection. Par exemple, le filtre de référence 53684 commercialisé par Oriel atténue l'intensité du rayonnement à 632,8 nm d'un facteur supérieur à 10^6, avec une largeur de bande de blocage de 28 nm et permet de détecter des décalages Raman supérieurs à 350 cm⁻¹. Toutefois, ce filtre étant utilisé en transmission sur l'excitation, il peut être avantageux d'utiliser des filtres de pouvoir bloquant moins élevé mais possédant une excellente transmission hors bande de blocage de manière à disposer d'un système plus résistant aux fortes intensités d'excitation. Par exemple, le filtre multicouches à variation d'indice continue de référence B46-566 commercialisé par Edmund Optics atténue l'intensité du rayonnement à 632,8 nm d'un facteur supérieur à 10^3, avec une largeur de bande de blocage légèrement inférieure à 32 nm, ce qui permet de détecter des décalages Raman supérieurs à 400 cm⁻¹. Compte tenu de leur transmission élevée en dehors de la bande de blocage, il est possible d'utiliser deux ou plusieurs de ces filtres en série pour augmenter le pouvoir de réjection. Lorsque la source est un laser ou une source basée sur un OPO, le filtre de réjection est avantageusement disposé à la sortie de la source.

La simple substitution d'un jeu de filtres et diaphragmes intercalé dans la colonne optique au niveau du plan focal de l'objectif f1 permet de commuter de l'arrangement de mesure de réflectivité à l'arrangement de mesure de fluorescence ou de diffusion Raman.

Le système peut permettre également de conserver la fonction d'imagerie de base (champ clair/champ sombre) par l'adjonction d'un jeu supplémentaire de diaphragmes. Il permet la réalisation d'essais à l'air ou au contact d'un milieu liquide et en temps réel pour réaliser des mesures cinétiques. Le couplage des différentes techniques au sein de mêmes essais permet d'obtenir des informations de nature chimique ou biochimique avec ou sans marquage des cibles ou des sondes, de corréler les informations obtenues par au moins deux techniques indépendantes et d'effectuer des contrôles de performance des essais en temps réel des supports utilisés pour les essais.

Le système peut donc mettre en oeuvre un procédé d'analyse chimique, biologique ou biochimique d'un échantillon 10, dans lequel on éclaire ledit échantillon avec un faisceau lumineux monochromatique; on acquiert plusieurs images dudit échantillon en commutant entre deux au moins des techniques d'analyse parmi l'ensemble comprenant la résonance plasmonique de surface, la fluorescence, et la diffusion Raman, et on superpose lesdites images.

Pour les mesures de transmittance/réflectance UV-visible comme pour la mesure de la diffusion Raman, l'analyse spectrale nécessaire est réalisée en enregistrant plusieurs images correspondant à plusieurs longueurs d'onde d'excitation. Dans ce cas une source accordable peut être avantageuse.

Grâce à l'invention, il est possible de focaliser le faisceau transmis ou réfléchi spéculairement, de façon à pouvoir soit le sélectionner en le faisant passer au travers d'un diaphragme (réflectance/transmittance) soit le masquer par un obturateur (fluorescence, diffusion Raman), tout en conservant la possibilité d'imager la surface étudiée. Pour pouvoir comparer commodément les images enregistrées dans les différents modes, on n'utilise pour l'analyse Raman ni dispositif d'analyse dispersif, ni dispositif de filtrage spatial sur le système de détection ; au contraire, on détecte seulement la lumière émise dans une bande étroite de longueurs d'onde sélectionnée par un filtre.

Il est donc possible grâce à la présente solution de combiner dans un même appareillage les avantages des modes de détection / d'analyse par LSPR, SERS et par fluorescence. Cet appareillage permet donc d'acquérir plusieurs images superposables d'un même échantillon avec différents types de contraste, ce qui est particulièrement utile dans le contexte des supports possédant une couche présentant une forte activité LSPR permettant d'exalter les deux autres effets physiques et permettant de dépasser les limitations habituelles associées à la chimie d'immobilisation des sondes. La combinaison de l'appareillage objet de la présente invention avec de tels supports rend possibles des essais chimiques ou biochimiques de haute performance, avec une détection multi-techniques en temps réel et dans les conditions usuelles d'essai en milieu physiologique.

L'invention n'est pas limitée aux modes de réalisation décrits précédemment. Elle peut être appliquée dans d'autres contextes. Par exemple, il est possible de réaliser des essais de reconnaissance biologique massivement parallèles dans un format distinct de celui des biopuces en utilisant la possibilité de coder des particules d'une taille de l'ordre de 100 µm en leur conférant une structuration optique particulière. Ces particules codées peuvent être produites en grand nombre à faible coût avec plus de 10^⁶ codes distincts. Ces codes sont lus en mesurant le spectre de réflectivité de la particule. Pour faire des essais, on greffe la même sonde sur toutes les particules de même code, et on met ensuite toutes les particules au contact d'un échantillon à analyser contenant des cibles marquées par un fluorophore. Les particules sont ensuite dispersées (par dépôt puis évaporation) à la surface d'une lame de microscope, et on analyse les reconnaissances moléculaires en mesurant sous microscope optique, pour chaque particule, son spectre de réflectivité et sa fluorescence. En procurant une solution pour effectuer ces mesures en mode imagerie pour un grand nombre de particules simultanément, la présente invention apporte une solution susceptible de conférer à ce type d'essais le haut débit dont il ne pouvait pas disposer jusqu'à présent.

## Revendications

1. Système d'imagerie pour l'analyse chimique, biologique ou biochimique d'un échantillon (10), comprenant
- un dispositif (40) de support de l'échantillon (10),
- un dispositif (20) de détection optique,
- un dispositif (30) d'éclairement, susceptible d'émettre un faisceau lumineux monochromatique, et
- un objectif (f1) de grande ouverture,
**caractérisé en ce que** l'objectif (f1) est configuré pour, en aval de l'échantillon (10) :
• focaliser le faisceau lumineux excitateur réfléchi en un point (C) situé dans le plan focal (FF) dudit objectif (f1) ; et
• transformer le faisceau lumineux réémis ou diffusé en faisceau quasi-parallèle,
et **en ce que** le système comprend en outre un dispositif (70) d'obturation sélective du faisceau lumineux réfléchi, réémis ou diffusé, collecté par ledit objectif (f1).

2. Système selon la revendication 1, dans lequel le dispositif d'obturation sélective (70) comprend
- un diaphragme (71) configuré pour être placé dans le plan focal dudit l'objectif autour du point (C) de focalisation, et
- un obturateur (72) configuré pour être placé au point (C) de focalisation.

3. Système selon la revendication 2, dans lequel le dispositif d'obturation sélective (70) comprend en outre au moins un filtre parmi un ensemble comprenant un filtre passe-haut et un filtre passe-bande.

4. Système selon l'une quelconque des revendications précédentes, comprenant en outre, en amont dudit objectif, des moyens de réflexion du faisceau lumineux depuis la source dudit faisceau vers le dispositif (40) de support de l'échantillon.

5. Système selon la revendication 4, dans lequel lesdits moyens de réflexion comprennent un miroir (50) disposé à proximité de l'axe optique (YY), ou un miroir semi transparent placé dans l'axe optique (YY), orientés à 45° +/- 2° par rapport à l'axe optique, et disposés de sorte à observer l'échantillon (10) en transmission ou en réflexion.

6. Système selon l'une quelconque des revendications 2 à 5, dans lequel le dispositif (70) d'obturation sélective du faisceau lumineux collecté comprend en outre un commutateur électrique ou mécanique, pour activer sélectivement ledit diaphragme (71) ou ledit obturateur (72).

7. Système selon l'une quelconque des revendications précédentes, dans lequel le dispositif d'éclairement (30) comprend une source de lumière blanche associée à un monochromateur, et/ou une source de lumière monochromatique, accordable ou non.

8. Système selon l'une quelconque des revendications précédentes, dans lequel le dispositif d'éclairement (30) comprend un ensemble d'au moins une fibre optique et un ensemble d'au moins une source lumineuse unitaire, éventuellement accordable, et dans lequel l'entrée d'au moins une fibre est susceptible d'être reliée à au moins une source unitaire.

9. Système selon la revendication 8, dans lequel l'entrée d'au moins une fibre est susceptible d'être reliée à plusieurs sources unitaires, le système comprenant en outre un commutateur pour relier l'entrée de la fibre à l'une des sources unitaires dans un mouvement relatif entre l'entrée de la fibre et la source unitaire reliée à l'entrée de celle-ci.

10. Système selon l'une quelconque des revendications précédentes, comprenant en outre un faisceau de fibres dans lequel l'entrée d'au moins deux fibres est susceptible d'être reliée à une source lumineuse respective, le système comprenant en outre un commutateur électrique ou optique pour activer sélectivement ladite source lumineuse.

11. Procédé d'analyse chimique, biologique ou biochimique d'un échantillon, dans un système selon l'une quelconque des revendications précédentes, comprenant des étapes consistant à :
- éclairer un échantillon (10) par un faisceau lumineux monochromatique,
- focaliser le faisceau excitateur réfléchi en aval de l'échantillon (10) par un objectif (f1) en un point (C) situé dans le plan focal (FF) dudit objectif (f1),
**caractérisé en ce qu'**il comprend en outre des étapes consistant à :
- transformer le faisceau lumineux réémis ou diffusé par l'échantillon (10) en faisceau quasi-parallèle,
- obturer sélectivement le faisceau lumineux réfléchi, réémis ou diffusé, collecté par le dit objectif (f1), et
- acquérir par une caméra (20) plusieurs images dudit échantillon (10) en fonction de l'obturation sélective.

12. Procédé selon la revendication 11, comprenant en outre une étape de comparaison desdites images.

13. Procédé selon l'une quelconque des revendications 11 ou 12, comprenant en outre une étape de filtrage du faisceau lumineux, en aval de la focalisation du faisceau excitateur.

14. Procédé selon l'une quelconque des revendications 11 à 13, comprenant en outre des étapes consistant à
- accorder la source lumineuse monochromatique dudit faisceau lumineux, et
- mesurer différents décalages Raman en fonction de la longueur d'onde accordée choisie.

## Patentansprüche

1. Bildgebungssystem zur chemischen, biologischen oder biochemischen Analyse einer Probe (10), umfassend:
- eine Vorrichtung (40) zur Halterung der Probe (10),
- eine Vorrichtung (20) zur optischen Erfassung,
- eine Vorrichtung (30) zur Beleuchtung, welche dazu geeignet ist, einen monochromatischen Lichtstrahl zu emittieren, und
- ein Objektiv (f1) mit großer Apertur,
**dadurch gekennzeichnet, dass** das Objektiv (f1) dazu ausgestaltet ist, der Probe (10) nachgelagert:
• den reflektierten Anregungslichtstrahl in einem Punkt (C) zu fokussieren, welcher sich in der Fokusebene (FF) des Objektivs (f1) befindet; und
• den reemittierten oder gestreuten Lichtstrahl in einen quasi-parallelen Strahl zu transformieren,
und das System außerdem eine Vorrichtung (70) zum selektiven Blockieren des reflektierten, reemittierten oder gestreuten Lichtstrahls, welcher über das Objektiv (f1) gesammelt wird, umfasst.

2. System nach Anspruch 1, wobei die Vorrichtung zum selektiven Blockieren (70) umfasst:
- eine Blende (71), welche dazu ausgestaltet ist, in der Fokusebene des Objektivs um den Punkt (C) der Fokussierung herum positioniert zu werden, und
- einen Verschluss (72), welcher dazu ausgestaltet ist, auf dem Punkt (C) der Fokussierung positioniert zu werden.

3. System nach Anspruch 2, wobei die Vorrichtung zu selektiven Blockieren (70) außerdem einen Filter aus einer Gruppe umfasst, welche einen Hochpassfilter und einen Bandpassfilter umfasst.

4. System nach einem beliebigen der vorhergehenden Ansprüche, umfassend außerdem, vorgelagert dem Objektiv, Mittel zur Reflektion des Lichtstrahls von der Quelle des Strahls in Richtung der Vorrichtung (40) zur Halterung der Probe.

5. System nach Anspruch 4, wobei die Mittel zur Reflektion einen Spiegel (50), welcher in der Nähe der optischen Achse (YY) positioniert ist, oder einen halbtransparenten Spiegel, welcher in der optischen Achse (YY) positioniert ist, umfassen, welche mit 45° +/- 2° im Verhältnis zu der optischen Achse orientiert sind und zur Beobachtung der Probe (10) in Transmission oder in Reflektion angeordnet sind.

6. System nach einem beliebigen der Ansprüche 2 bis 5, wobei die Vorrichtung (70) zum selektiven Blockieren des gesammelten Lichtstrahls außerdem einen elektrischen oder mechanischen Schalter umfasst, um selektiv die Blende (71) oder den Verschluss (72) zu aktivieren.

7. System nach einem beliebigen der vorhergehenden Ansprüche, wobei die Vorrichtung zur Beleuchtung (30) eine mit einem Monochromator verknüpfte Weißlichtquelle und/oder eine abstimmbare oder nicht abstimmbare monochromatische Lichtquelle umfasst.

8. System nach einem beliebigen der vorhergehenden Ansprüche, wobei die Vorrichtung zur Beleuchtung (30) eine Anordnung aus wenigstens einer optischen Faser und einer Anordnung aus wenigstens einer, optional abstimmbaren, einheitlichen Lichtquelle umfasst, und wobei der Eingang der wenigstens einen Faser dazu geeignet ist, mit der wenigstens einen einheitlichen Quelle verbunden zu werden.

9. System nach Anspruch 8, wobei der Eingang der wenigstens einen Faser dazu geeignet ist, mit mehreren einheitlichen Quellen verbunden zu werden, wobei das System außerdem einen Schalter umfasst, um den Eingang der Faser mit einer der einheitlichen Quellen in einer relativen Bewegung zwischen dem Eingang der Faser und der einheitlichen Quelle, welche mit dem Eingang derselben verbunden wird, zu verbinden.

10. System nach einem beliebigen der vorhergehenden Ansprüche, umfassend außerdem ein Bündel von Fasern, bei welchem der Eingang von wenigstens zwei Fasern dazu geeignet ist, mit einer entsprechenden Lichtquelle verbunden zu werden, wobei das System außerdem einen elektrischen oder optischen Schalter umfasst, um selektiv die Lichtquelle zu aktivieren.

11. Verfahren zur chemischen, biologischen oder biochemischen Analyse einer Probe in einem System nach einem beliebigen der vorhergehenden Ansprüche, umfassend Schritte, welche beruhen auf:
- Beleuchten einer Probe (10) durch einen monochromatischen Lichtstrahl,
- Fokussieren des reflektierten Anregungslichtstrahls nachgelagert der Probe (10) durch ein Objektiv (f1) in einem Punkt (C), welcher sich in der Fokusebene (FF) des Objektivs (f1) befindet,
**dadurch gekennzeichnet, dass** es außerdem Schritte umfasst, welche beruhen auf:
- Transformieren des durch die Probe (10) reemittierten oder gestreuten Lichtstrahls in einen quasi-parallelen Strahl,
- selektives Blockieren des reflektierten, reemittierten oder gestreuten Lichtstrahls, welcher durch das Objektiv (f1) gesammelt wird, und
- Erfassen durch eine Kamera (20) von mehreren Bildern der Probe (10) in Abhängigkeit von der selektiven Blockierung.

12. Verfahren nach Anspruch 11, umfassend außerdem einen Schritt eines Vergleichs der Bilder.

13. Verfahren nach einem beliebigen der Ansprüche 11 oder 12, umfassend außerdem einen Schritt eines Filterns des Lichtstrahls, nachgelagert der Fokussierung des Anregungsstrahls.

14. Verfahren nach einem beliebigen der Ansprüche 11 bis 13, umfassend außerdem Schritte, welche beruhen auf:
- Abstimmen der monochromatischen Lichtquelle des Lichtstrahls, und
- Messen von verschiedenen Raman-Verschiebungen in Abhängigkeit von der gewählten abgestimmten Wellenlänge.

## Claims

1. Imaging system for chemically, biologically or biochemically analysing a sample (10), comprising
- a device (40) for supporting the sample (10),
- an optical detection device (20),
- a lighting device (30) capable of emitting a monochromatic light beam, and
- a wide aperture objective (f1),
**characterised in that** the objective (f1) is configured to, downstream of the sample (10):
• focus the reflected excitation light beam on a point (C) located in the focal plane (FF) of said objective (f1); and
• transform the re-transmitted or scattered light beam into a quasi-parallel beam,
and **in that** the system further comprises a device (70) for selectively blocking the reflected, re-transmitted or scattered light beam collected by said objective (f1).

2. System as claimed in claim 1, wherein the selective shutter device (70) comprises
- a diaphragm (71) configured to be placed in the focal plane of said objective around the focal point (C), and
- a shutter (72) configured to be placed on the focal point (C).

3. System as claimed in claim 2, wherein the selective shutter device (70) further comprises at least one filter from a set comprising a high-pass filter and a band-pass filter.

4. System as claimed in any one of the preceding claims, further comprising, downstream of said objective, means for reflecting the light beam from the source of said beam to the device (40) for supporting the sample.

5. System as claimed in claim 4, wherein said reflection means comprise a mirror (50) disposed in the vicinity of the optical axis (YY), or a semi-transparent mirror positioned in the optical axis (YY), oriented at 45° +/- 2°, with respect to the optical axis and disposed so as to observe the sample (10) in transmission or in reflection.

6. System as claimed in any one of claims 2 to 5, wherein the device (70) for selectively blocking the collected light beam further comprises an electrical or mechanical switch for selectively activating said diaphragm (71) or said shutter (72).

7. System as claimed in any one of the preceding claims, wherein the lighting device (30) comprises a white light source co-operating with a monochromator and/or a monochromatic light source, which may or may not be tunable.

8. System as claimed in any one of the preceding claims, wherein the lighting device (30) comprises a set of at least one optical fibre and a set of at least one, optionally tunable, unitary light source, and wherein the input of at least one fibre can be connected to at least one unitary source.

9. System as claimed in claim 8, wherein the input of at least one fibre can be connected to several unitary sources, the system further comprising a switch to connect the input of the fibre to one of the unitary sources by a relative movement between the input of the fibre and the unitary source connected to the input thereof.

10. System as claimed in any one of the preceding claims, further comprising a bundle of fibres in which the input of at least two fibres can be connected to a respective light source, the system further comprising an optical or electrical switch for selectively activating said light source.

11. Method of chemically, biologically or biochemically analysing a sample in a system as claimed in any one of the preceding claims, comprising steps consisting of:
- illuminating a sample (10) by means of a monochromatic light beam,
- focussing the excitation beam reflected downstream of the sample (10) by means of an objective (f1) on a point (C) located in the focal plane (FF) of said objective (f1), **characterised in that** it further comprises steps consisting of:
- transforming the light beam re-transmitted or scattered by the sample (10) into a quasi-parallel beam,
- selectively blocking the reflected, re-transmitted or scattered light beam collected by said objective (f1), and
- capturing several images of said sample (10) by means of a camera (20) as a function of the selective blocking.

12. Method as claimed in claim 11, further comprising a step of comparing said images.

13. Method as claimed in any one of claims 11 or 12, further comprising a step of filtering the light beam downstream of the focussing of the excitation beam.

14. Method as claimed in any one of claims 11 to 13, further comprising the steps consisting of
- tuning the monochromatic light source of said light beam, and
- measuring different Raman shifts as a function of the selected tuned wavelength.
